# EUROPEAN PATENT APPLICATION

(11) **EP 1 650 946 A2**
(43) Date of publication of application: **26.04.2006**
(21) Application number: 05109401.9
(22) Date of filing: 10.10.2005
(51) Int. Cl.: H04N 1/00

(54) **A Printer with Web-Server**

(30) Priority: 25.10.2004 KR 2004085333
(71) Applicant: Samsung Electronics Co, Ltd, Suwon-si, Gyeonggi-do 442-742 (KR)
(72) Inventor: Lee, Joo-chul, Gyeonggi-do (KR)
(74) Representative: Geary, Stuart Lloyd

(57) **Abstract**

A printer with a web server embedded therein and a printing method thereof are provided. The printer includes a web server which generates a web page, transmits the web page to a user's web server terminal, and receives print data input in the web page by the user and a printing unit which converts the print data received by the web server into printable data. The web server includes a web page item setting unit which automatically establishes selection categories and items for each of the selection categories, a web page generation unit which generates a web page according to the selection categories and the items for each of the selection categories and a web page outputting unit which transmits the web page to the user's web server terminal via the Internet. Accordingly, it is possible to print data which is input by a user using a web page provided by a web server installed in a printer, without a printer driver or an application program.

## Description

The present invention relates to a printer having a web server.

In general, computers and printers are the two most critical and essential parts of office automation. A printer driver for driving a printer needs to be installed in a computer in order to enable the printer to print documents which are generated by the computer. A printer driver converts print data which is created by a computer program into data that is interpreted by a printer for printing an image. In other words, when a command to "print" is given by the computer, the printer driver divides the print data into a number of pages, converts data and control codes included in each of the pages into printer-interpretable data by appropriately processing the data. The printer-interpretable data is transmitted to a printer via a communication interface.

Therefore, in order to enable a printer to correctly print a document which is produced by a computer connected to the printer via a communication interface, a printer driver compatible with the printer must be installed in the computer. However, in order for a user to install a printer driver in a computer, the user should carry a diskette or compact disc on which the printer driver is stored with him or her or be able to download the driver from the Internet. If the diskette or compact disc is missing or damaged and the user does not have access to the Internet, the user cannot install the printer driver onto the computer and thus cannot use the printer.

As the number of mobile computer (a laptop computer is an example of a mobile computer) users increase, more people want to print documents generated by their mobile computers, using a printer provided in the place where they are currently located. In this case, they are required to install a printer driver suitable for the printer first, which is very inconvenient.

Accordingly, a need exists for an improved printer for printing data without the inconvenience of having to install a printer driver.

The present invention provides a printer with a web server embedded therein and a printing method thereof which can be used to print data input by a user without a printer driver.

According to an aspect of the present invention, there is provided a printer according to claim 1 appended hereto.

According to an aspect of the present invention, a printer with a web server embedded therein is provided. The printer comprises a web server which generates a web page, transmits the web page to a user's web server terminal, and receives print data input in the web page by the user and a printing unit which converts the print data received by the web server into printable data. The web server comprises a web page item setting unit which automatically establishes selection categories and items for each of the selection categories, a web page generation unit which generates a web page according to the selection categories and the items for each of the selection categories and a web page outputting unit which transmits the web page to the user's web server terminal via the Internet.

According to another aspect of the present invention, a printing method for a printer with a web server embedded therein is provided. The printing method comprises generating a web page by automatically establishing selection categories and items for each of the categories, transmitting the web page to a user's web server terminal if the user accesses the web server of the printer and printing print data with reference to the items established in the selection categories selected by the user.

An embodiment of the present invention will now be described, by way of example only, and with reference to the accompanying Figures, in which:
Figure 1 is a block diagram illustrating a network printing system comprising a printer with a web server embedded therein according to an embodiment of the present invention;
Figure 2 is a block diagram illustrating a web server of Figure 1 according to an exemplary embodiment of the present invention;
Figure 3 is a diagram illustrating a web page displayed on a web browser according to an embodiment of the present invention;
Figure 4 is a diagram illustrating a result of printing data of Figure 3 according to an embodiment of the present invention; and
Figure 5 is a flowchart illustrating a printing method for a printer with a web server embedded therein according to an embodiment of the present invention.

Throughout the drawings, like reference numerals will be understood to refer to like parts, components and structures.

The present invention will now be described in detail with reference to the accompanying drawings in which exemplary embodiments of the invention are shown.

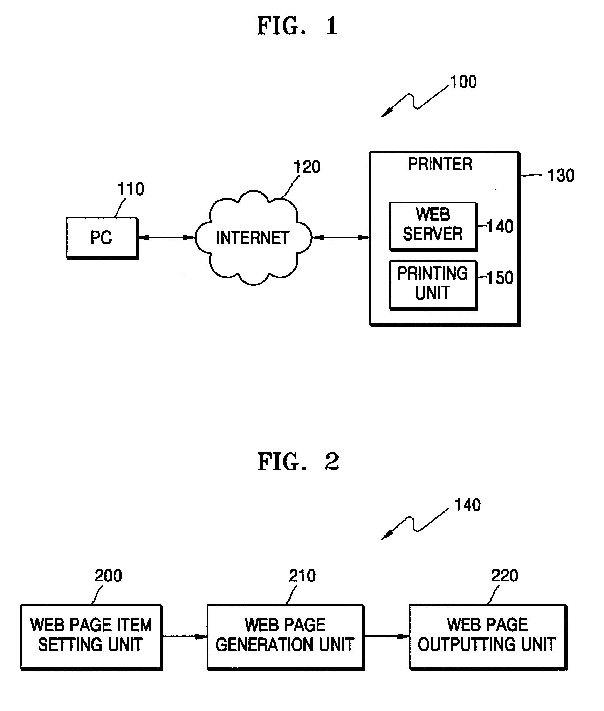

Figure 1 is a block diagram illustrating a network printing system 100 comprising a printer 130 having a web server 140 embedded therein according to an embodiment of the present invention. Referring to Figure 1, the network printing system 100 comprises a personal computer (PC) 110 and the printer 130 which are connected to the Internet 120. The printer 130 comprises the web server 140 and a printing unit 150.

The PC 110 is an example of a user's web server terminal. However, the web server terminal is not restricted to the PC 110 but may be any device that can access the Internet 120, for example, a personal digital assistant (PDA), a mobile phone or a laptop computer.

The web server 140 is a microprocessor that communicates with the PC 110 using a hypertext transfer protocol (HTTP) to transmit/receive hypertext markup language (HTML) files to/from the PC 110. The web server 140 comprises a controller (not shown) of the printer 130.

The printing unit 150 converts print data received by the web server 140 into bitmap data with reference to font data stored in a memory (not shown) and prints the bitmap data on printing paper.

Figure 2 is a block diagram illustrating the web server 140 embedded in the printer 130. Referring to Figure 2, the web server 140 comprises a web page item setting unit 220, a web page generation unit 210, and a web page outputting unit 220.

The web page item setting unit 200 establishes selection categories and items for each of the selection categories according to the performance and operating state of the printer 130.

The web page generation unit 210 generates a web page according to the selection categories and the items for each of the selection categories which use a web description language, in other words, HTML.

The web page outputting unit 220 transmits the web page generated by the web page generation unit 210 to the PC via the Internet 120.

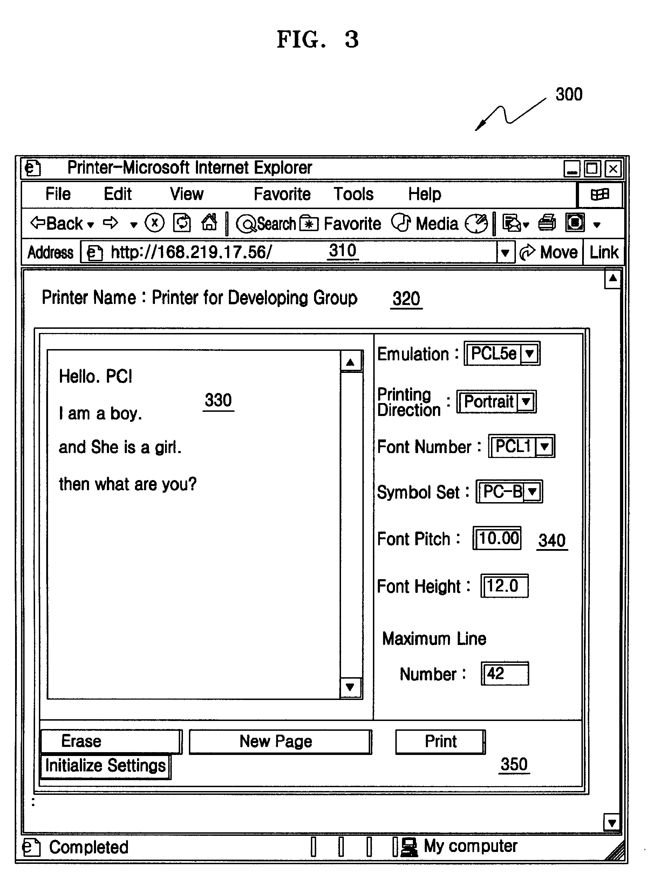

Figure 3 is a diagram illustrating a web page 300 displayed on a monitor (not shown) of the PC 110 of Figure 1. Referring to Figure 3, the web page 300 comprises a web address section 310, a printer name section 320, a print data input window 330, a font setting window 340, and a function selection window 350.

The web address section 300 displays a uniform resource locator (URL), which is a combination of English letters and/or numbers which indicate the address of a home page on the World Wide Web (WWW).

The printer name section 320 displays the name of the printer 130. A user may cut and paste or type print data into the print data input window 330.

The font setting window 340 comprises selection categories, for example, 'emulation' which is used for selecting an emulation to be used for printing print data, 'printing direction', which is used for selecting a direction in which the print data is to be printed, 'font number', 'symbol set', 'font pitch', 'font height', and 'maximum line number', which specifies a maximum number of lines printed in a page. Each of the selection categories, 'emulation', 'printing direction' (e.g. landscape or portrait), 'font number', and 'symbol set', offers a scrolling menu with which a user can select one of a plurality of items related to each of the selection categories. Each of the selection categories, 'font pitch', 'font height', and 'maximum line number', offers an input field into which the user can directly input data.

The function selection window 350 comprises a 'print' button that the user uses to issue a request to print the print data. In addition, the function selection window 350 may also comprise an 'initialize settings' button, which erases data that the user has input into the font setting window 340 when selected and thus allows the user to input new data into the font setting window 340, and a 'new page' button, which inputs special characters into the print data so that portions of the print data prior to the special characters can be printed on a different sheet of paper from portions of the print data following the special characters.

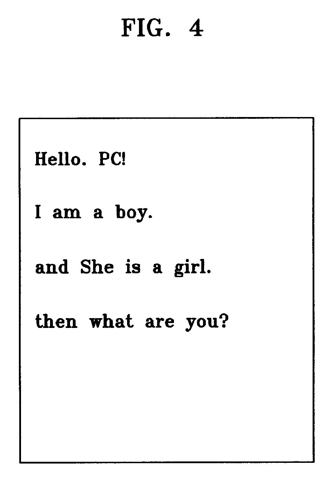

Figure 4 is a diagram illustrating a result of printing print data input to the print data input window 330 of the web page 300 of Figure 3.

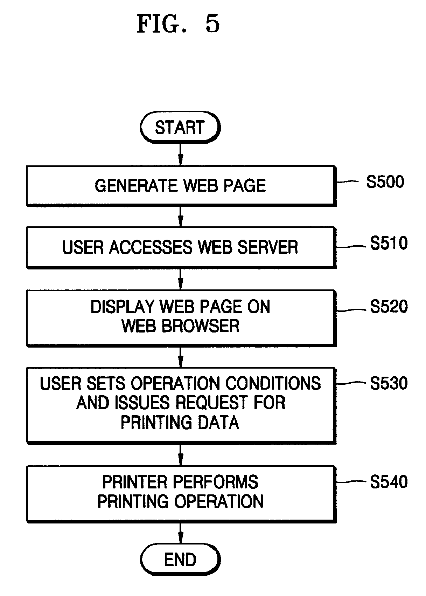

Figure 5 is a flowchart illustrating a printing method for a printer with a web server embedded therein according to an embodiment of the present invention. Referring to Figures 1 to 3 and Figure 5, at step S500, the web server 140 generates a web page. The web page item setting unit 200 establishes selection categories and items for each of the selection categories according to the performance and operating state of the printer 130. For example, if font data stored in a memory (not shown) is updated or if a new font is downloaded into the memory, the web page item setting unit 200 may establish items for font-related selection categories by using the updated or downloaded font data. In addition, the web page item setting unit 200 may establish the maximum number of lines to be printed on a page in the font setting window 340. This will be established according to the size of printing paper laid on a paper feeding apparatus (not shown). The web page generation unit 210 generates a web page according to the selection categories and the items for each of the selection categories by using a web description language, in other words, HTML.

At step S510, a user inputs a web address into a web browser and thus connects to the web server 140. At step S520, the web server 140 displays a web page on the web browser. If the web server 140 determines that the user is connected to the web server 140, it provides the PC 110 with a web page file generated by the web page generation unit 210.

At step S530, the user establishes an operating mode in which print data is to be printed, print data size, an emulation, a printing direction, font number, a symbol set, font size, font pitch, and a maximum number of lines to be printed in a page by inputting data into the font setting window 340 displayed on the web page. The user cuts and pastes or types a document to be printed into the print data input window 330 displayed on the web page. Thereafter, the user hits a 'print' button in the function selection window 350. Thereafter, the PC 110 transmits print data, comprising the data input to the font setting window 340 and the document to be printed, to the web server 130 via the Internet 120.

At step S540, the printer 130 performs a printing operation. The web server 140 transmits the print data received from the PC 110 to the printing unit 150. An example of the print data transmitted to the printing unit 150 is shown in Table 1.

**Table 1**

| TYPE | SIZE (Bytes) | SETTING VALUE | MEANING |
|---|---|---|---|
| Operating Mode | 1 | 0x0005 | Print data using web server |
| Data Size | 2 | 9+"Print Data Size" | Indicate size of transmitted data |
| Emulation | 1 | 0x0001 | Use PCL5e |
| Printing | 1 | 0x0001 | Print data in portrait |
| Direction | | | |
| Font Number | 1 | 0x0000 | Use font No. PCL1 |
| Symbol Set | 1 | 0x0000 | Output special characters using symbol set No. PC-8 |
| Font Pitch | 2 | 0x000A0000 | Set font pitch to 10.00 |
| Font Height | 2 | 0x000C0000 | Set font height to 12.00 |
| Maximum Line Number | 1 | 0x002A | Set maximum number of lines printed on one page to 42 |
| Print Data | Variable | 0x48656C6C6 F2E20504321 200D0A4920 616D2061206 26F792E0D0 A616E642053 68652069732 06120676972 6C2E0D0A74 68656E20776 86174206172 6520796F753 F20 | Display data input by user using ASCII or UNICODE Content of input data is as follows: Hello. PC! I am a boy. and She is a girl. then what are you? |

Thereafter, the printing unit 150 converts the print data into bitmap graphic data with reference to font data stored therein, and then the printing unit 150 prints the bitmap graphic data onto paper.

This embodiment of the present invention can be realized as computer-readable code written on a computer-readable recording medium. Examples of the computer-readable recording medium comprise recording apparatuses on which data are stored in such a computer-readable manner. For example, the computer-readable recording medium may be a read only memory (ROM), a random access memory (RAM), a compact disk read only memory (CD-ROM), a magnetic tape, a floppy disc, an optical data storage, or a carrier wave, in other words, data transmission through the Internet.

According to the embodiments of the present invention, it is possible to print data which is input by a user by using a web page provided by a web server installed in a printer, without a printer driver or an application program.

While the present invention has been particularly shown and described with reference to an embodiments, it will be understood by those of ordinary skill in the art that various changes in form and details may be made therein.

## Claims

1. A printer (130) comprising a web server (140) configured to receive data to be printed from a user input terminal (110) via the Internet (120).

2. A printer (130) according to claim 1, wherein the web server (140) is configured to generate a web page (300) for transmission to the user input terminal (110), the web page (300) being configured to have the data to be printed provided therein by the user input means (110).

3. A printer (130) according to claim 2, wherein the web server (140) is configured to receive the web page (300) having the data to be printed provided therein and to extract the data from the web page (300) for printing.

4. A printer with a web server embedded therein, the printer comprising:
a web server for generating a web page, transmitting the web page to a web server terminal, and receiving print data input in the web page; and
a printing unit for converting the print data received by the web server into printable data.

5. The printer of claim 4, wherein the web server comprises:
a web page item setting unit for automatically establishing selection categories and items for each of the selection categories;
a web page generation unit for generating a web page based on the selection categories and the items for each of the selection categories; and
a web page outputting unit for transmitting the web page to the web server terminal via the Internet.

6. The printer of claim 4, wherein the web server terminal is selected from the group consisting of a personal computer (PC), a personal digital assistant (PDA), a mobile phone, a laptop computer.

7. The printer of claim 4, wherein the web server terminal is a mobile personal computer.

8. The printer of claim 4, wherein the web page comprises at least one of a print data input window, an 'initialize settings' button, a 'new page' button, and a font setting window.

9. The printer of claim 7, wherein the font setting window comprises at least one of a printing direction selection window, a symbol set selection window, a font pitch setting window, a font height selection window, and a maximum line number selection window.

10. A printing method of a printer with a web server embedded therein, the printing method comprising:
generating a web page by automatically establishing selection categories and items for each of the categories;
transmitting the web page to a user's web server terminal if the user accesses the web server of the printer; and
printing print data with reference to the items established in the selection categories selected by the user.

11. The printing method of claim 9, wherein the user accesses the web server of the printer by using one of a personal computer (PC), a personal digital assistant (PDA), a mobile phone, a laptop computer.

12. The printing method of claim 9, wherein the user accesses the web server of the printer by using a mobile personal computer.
